# FASCICULE DE BREVET EUROPEEN

(11) **EP 0 571 254 B1**
(45) Date de publication et mention de la délivrance du brevet: **03.04.1996**
(21) Numéro de dépôt: 93401244.4
(22) Date de dépôt: 14.05.1993
(51) Int. Cl.: F02K 9/64

(54) **Enceinte de combustion refroidie par transpiration**
Oberflächengekühlte Brennkammer
Transpiration cooled combustion chamber

(30) Priorité: 18.05.1992 FR 9206002
(43) Date de publication de la demande: 24.11.1993
(73) Titulaire: SOCIETE EUROPEENNE DE PROPULSION, F-92150 Suresnes (FR)
(72) Inventeur: Pellet, Marc B., F-27200 Vernon (FR)
(74) Mandataire: Thévenet, Jean-Bruno

(56) Documents cités:
- US-A- 2 183 313
- US-A- 3 910 039

## Description

### Domaine de l'invention

La présente invention concerne le refroidissement par transpiration d'une enceinte contenant des gaz chauds telle qu'une ligne de gaz chauds, une chaudière, ou une chambre de combustion de moteur-fusée, ou de générateur de gaz, ou de préchambre.

### Art antérieur

On connaît déjà divers systèmes de refroidissement de parois poreuses par transpiration.

L'écoulement, dit de transpiration, d'un fluide froid depuis une première face de la paroi poreuse située du côté de la source froide vers la deuxième face de la paroi poreuse située du côté de la source chaude s'effectue avec des transferts de chaleur au sein de la paroi poreuse. La paroi poreuse est le siège de deux flux thermiques de directions opposées, à savoir un flux de conduction véhiculé par la matrice solide et un flux d'advection véhiculé par le fluide. Ces deux flux interagissent en s'échangeant de la puissance selon un mécanisme d'échange, dénommé "transvection", qui correspond au niveau microscopique des pores, à une convection pariétale du fluide au contact de la matrice solide. Ce transfert thermique de la paroi plus chaude vers le fluide plus froid modifie les deux flux antagonistes de conduction et d'advection. La puissance extraite du flux de conduction incident est reprise par le flux d'advection véhiculé par le fluide et renvoyée vers son origine, c'est-à-dire la source chaude. Le flux de conduction progressant vers la zone froide se trouve donc diminué de cette puissance extraite. L'intensité du couplage thermique au sein de la paroi entre le matériau constitutif de celle-ci et le fluide, c'est-à-dire le coefficient d'échange interne, dépend de la géométrie interne du milieu poreux, de la nature du fluide et du débit de l'écoulement.

Le refroidissement par transpiration a déjà été envisagé pour une chambre propulsive de moteur-fusée dont la paroi est exposée sur une de ses faces au flux thermique provenant du foyer de combustion et doit cependant être maintenue à une température en deça de la limite admise par le matériau constitutif et compatible avec les exigences de tenue mécanique. Dans le cas d'un tel refroidissement par transpiration, la source froide est constituée par l'un des ergols à température ambiante ou cryotechnique et la paroi de la chambre est réalisée en matériau poreux, perméable à l'ergol de refroidissement. L'écoulement de transpiration traverse la paroi, avant d'être rejeté dans la chambre de combustion. Le fluide, durant son trajet, prélève de la puissance thermique à la paroi et, de ce fait, maintient celle-ci dans une limite de température acceptable. Un second effet de refroidissement est également obtenu par le fait que le fluide rejeté dans la chambre s'interpose entre la paroi et le foyer de combustion, créant ainsi un obstacle au flux thermique incident, avant même qu'il ne parvienne à la paroi.

Les documents de brevet US-A-3 832 290 et US-A- 3 910 039 décrivent ainsi une chambre de combustion de moteur-fusée comportant une paroi poreuse sur la face externe de laquelle des nervures sont rapportées pour constituer des compartiments d'application de fluide approximativement rectangulaires régulièrement répartis sur toute la périphérie de la chambre. Une paroi intermédiaire extérieure définit la face externe des compartiments qui est opposée à la paroi poreuse. Un orifice calibré unique d'alimentation en fluide de refroidissement est formé dans chaque compartiment à travers la paroi intermédiaire extérieure pour adapter la valeur du débit de transpiration recherché au niveau de chaque compartiment. Les dispositifs décrits permettent ainsi de procéder à une certaine adaptation du débit de refroidissement par transpiration aux diverses zones de la chambre à porosité constante de la paroi interne, mais cette adaptation ne peut s'opérer que de façon discontinue d'un compartiment à l'autre. De plus, la réalisation des chambres de combustion connues capables de permettre la mise en oeuvre d'un refroidissement par transpiration impliquent des usinages importants et par suite un coût de fabrication élevé.

### Objet et description succincte de l'invention

La présente invention vise à remédier aux inconvénients des dispositifs précités de refroidissement par transpiration d'une paroi poreuse et à permettre d'optimiser la consommation de fluide de refroidissement compte tenu des caractéristiques thermophysiques des différents constituants intervenant dans le phénomène de transpiration (paroi poreuse, flux thermique incident, fluide de refroidissement).

L'invention vise plus particulièrement à simplifier la réalisation des systèmes de refroidissement par transpiration de la paroi poreuse d'une enceinte contenant des gaz chauds et à permettre d'adapter facilement de façon continue les conditions de refroidissement à travers la paroi poreuse pour l'ensemble des sections de l'enceinte qui peut notamment, mais pas exclusivement, être constituée par une chambre propulsive de moteur-fusée.

Ces buts sont atteints grâce à une enceinte contenant des gaz chauds refroidie par transpiration, comprenant une paroi poreuse formant la partie interne de l'enceinte, et des moyens d'application d'un fluide de refroidissement sur la face externe de la paroi poreuse pour faire passer un débit de fluide de refroidissement par transpiration à travers la paroi poreuse, comportant une gaine de calibrage hydraulique appliquée sur la face externe de la paroi poreuse et constituée d'un matériau étanche au fluide de refroidissement et un volume d'alimentation en fluide de refroidissement ménagé entre la gaine de calibrage hydraulique solidaire de la paroi poreuse et une enveloppe d'étanchéité externe de l'enceinte, la gaine de calibrage hydraulique étant perforée d'une multiplicité de microperforations dont la densité de répartition varie de façon progressive selon diverses zones de la paroi de l'enceinte et se trouve d'autant plus grande que le flux thermique arrivant sur la paroi poreuse à refroidir est plus élevé, permettant ainsi l'application d'un débit surfacique prédéterminé sur la gaine de calibrage hydraulique dans les différentes zones de la paroi de l'enceinte, des entretoises étant interposées entre la gaine de calibrage hydraulique et l'enveloppe d'étanchéité externe, et la paroi poreuse étant constituée d'un matériau fritté réalisé par agglomération de billes métalliques dont les dimensions sont légèrement plus grandes que la plus petite dimension des microperforations de la gaine de calibrage hydraulique.

Selon l'invention, le débit de fluide de refroidissement transpirant peut être contrôlé localement de façon continue et progressive de façon à en minimiser la consommation globale. Le débit de fluide de refroidissement localement nécessaire dépend en effet du flux thermique incident, qui varie dans d'importantes proportions, suivant la section de l'enceinte considérée.

Le contrôle de ce débit en toute section de l'enceinte est obtenu conformément à l'invention grâce à la mise en oeuvre d'une gaine qui assure un calibrage hydraulique à modulation spatiale par son application directement contre la face externe de la paroi poreuse et de sa densité locale de perforation qui peut évoluer de façon progressive et définit en chaque section un débit de fluide de refroidissement à travers la paroi poreuse qui est adapté au flux thermique appliqué sur la face interne de la paroi poreuse.

Selon un premier mode de réalisation possible, le volume d'alimentation en fluide de refroidissement défini entre la gaine de calibrage et l'enveloppe d'étanchéité externe comprend un compartiment unique de section évolutive selon les différentes zones de la paroi de l'enceinte.

Selon un second mode de réalisation possible, des cloisons sont en outre interposées entre la gaine de calibrage hydraulique et l'enveloppe d'étanchéité externe pour définir dans le volume d'alimentation en fluide de refroidissement, des compartiments à des pressions différentes correspondant à différentes zones de la paroi de l'enceinte.

Dans ce cas, selon une première variante de réalisation, des orifices de passage calibrés sont ménagés dans les cloisons pour assurer une évolution prédéterminée du débit du fluide de refroidissement d'un compartiment à l'autre.

Selon une seconde variante de réalisation, des vannes reliées à des tuyauteries extérieures à ladite enveloppe d'étanchéité externe alimentent séparément les compartiments correspondant aux différentes zones de la paroi de l'enceinte pour assurer, dans chaque compartiment, l'alimentation d'un débit de fluide de refroidissement donné réglable indépendamment du débit de fluide de refroidissement dans les compartiments voisins.

Les microperforations de la gaine de calibrage hydraulique présentent une plus petite dimension, de l'ordre de quelques dizaines de micromètres, et une forme telle que des billes, légèrement plus grandes, ne puissent les traverser. La gaine présente elle-même une épaisseur de l'ordre de quelques dixièmes de millimètres.

Selon un mode particulier de réalisation, la gaine de calibrage hydraulique présente des microperforations constituées par des fentes allongées.

Avantageusement, les entretoises sont formées d'un élément de profilé et disposées perpendiculairement à la gaine de calibrage hydraulique ou bien encore simplement réalisées sous la forme de collerettes festonnées.

De façon préférentielle, le fluide de refroidissement sera un fluide cryotechnique distinct des ergols, issu d'un réservoir spécifique et mû par une pompe spécifique.

L'invention est applicable à des enceintes de divers types telles que des conduites de transport de gaz chauds, des chaudières, des chambres de combustion de générateurs de gaz ou de préchambres ou encore des chambres propulsives de moteurs-fusées.

On notera que dans le cas d'une application à un moteur-fusée, pour lequel le fluide de refroidissement est constitué par l'un des ergols, il est possible, grâce à l'invention, de réaliser un découplage complet des systèmes de refroidissement et d'injection principal d'ergol.

Ceci permet notamment, en particulier par rapport aux systèmes de refroidissement à circulation conservative d'ergol en double paroi:
- de contrôler séparément les débits envoyés dans chacun des deux systèmes de refroidissement et d'injection, et donc d'optimiser ces deux fonctions, notamment en faisant varier le débit de refroidissement, selon les phases du vol, et par exemple en prévoyant un débit de refroidissement qui est plus important à l'allumage et diminue progressivement ensuite afin de réduire le choc thermique infligé à la paroi et en augmenter ainsi la longévité,
- de diminuer, pour une même pression-foyer, la pression maximale d'ergol nécessaire en sortie du système de pompage , du fait que les résistances hydrauliques correspondant aux systèmes de refroidissement et d'injection se trouvent en parallèle et non pas en série, ce qui peut contribuer à apporter un gain de masse et réduire la complexité au niveau de la pompe assurant l'approvisionnement en ergols.

Le dispositif de refroidissement selon l'invention permet notamment d'utiliser un seul système de refroidissement au sein d'un moteur-fusée, aussi bien pour la partie convergente constituée par la chambre de combustion et le col de la tuyère que pour le divergent de la tuyère, tout en adaptant avec souplesse les conditions de refroidissement dans toute la chambre propulsive et d'une manière générale en réduisant le coût de fabrication et de fonctionnement, à performances égales, par rapport aux autres systèmes connus.

La présence d'entretoises entre la gaine de calibrage hydraulique et l'enveloppe d'étanchéité externe contribue à maintenir l'écartement entre ces deux éléments tout en améliorant par ailleurs la raideur de l'ensemble et en permettant d'assurer le transfert des efforts mécaniques dans la partie divergente de la tuyère, évitant ainsi le risque de flambage de la partie basse du divergent. La présence de cloisons renforce cet effet tout en permettant d'améliorer les conditions d'adaptation du débit de transpiration aux diverses zones de la chambre propulsive.

L'invention concerne encore un procédé de fabrication d'une enceinte contenant des gaz chauds refroidie par transpiration présentant la structure générale définie plus haut avec notamment une gaine de calibrage hydraulique.

Selon un premier mode de réalisation possible, on fabrique en premier lieu la gaine de calibrage hydraulique à partir d'un tôle munie de microperforations pour former une coque rigide, on rapporte ensuite des entretoises et le cas échéant des cloisons qui sont soudées sur la face externe de la gaine de calibrage hydraulique, on rapporte et on soude sur les entretoises et les cloisons à l'extérieur de celles-ci, une enveloppe externe d'étanchéité et on réalise la paroi poreuse par un dépôt appliqué sur la face interne de la gaine de calibrage hydraulique.

Dans ce cas, selon une variante de réalisation économique et avantageuse, pour réaliser la gaine de calibrage hydraulique on forme d'abord à partir d'un feuillard métallique plan des anneaux, par découpage et soudage, on assemble les anneaux par soudage pour définir une gaine dont la forme correspond à celle de l'enceinte à réaliser et on procède à des découpes au laser pour former les microperforations avec des densités locales de perforation variables.

Les entretoises et cloisons sont réalisées à partir de tôles planes, sont découpées en secteurs annulaires, puis sont soudées en place sur la gaine de calibrage hydraulique après un éventuel pré-pliage.

L'enveloppe d'étanchéité externe est réalisée à partir de la découpe d'un feuillard plan pour former des anneaux qui sont assemblés par soudage autour de la gaine de calibrage hydraulique, l'enveloppe d'étanchéité externe étant soudée en aveugle sur les entretoises et cloisons.

Selon une autre variante de réalisation, applicable au cas où la gaine de calibrage hydraulique est fabriquée avant la paroi poreuse, la gaine de calibrage hydraulique et l'enveloppe d'étanchéité externe sont réalisées par déformation superplastique ou hydroformage, sous la forme de deux demi-coques réalisées séparément puis soudées.

Selon un mode de réalisation préférentiel pour lequel la paroi poreuse est fabriquée après la gaine de calibrage hydraulique, le procédé est caractérisé en ce que la paroi poreuse est réalisée par la technique de la métallurgie des poudres en utilisant comme matrice externe la gaine de calibrage hydraulique rendue solidaire de l'enveloppe d'étanchéité externe par les entretoises et cloisons et comme matrice interne un mandrin en deux parties, et en ce que le volume de moulage dans lequel doit être formée la paroi poreuse est rempli d'un mélange granulaire constitué de microbilles sphériques en matériau métallique accompagnées de grains de matériau de brasure de dimension interstitielle, et en ce que l'ensemble est ensuite chauffé de façon à réaliser la fusion du matériau de brasage venant former des ponts entre les microbilles.

Selon un autre mode de réalisation possible on fabrique en premier lieu la paroi poreuse, on applique ensuite la gaine de calibrage hydraulique sur la face externe de la paroi poreuse par déformation élastique à chaud, on rapporte des entretoises et le cas échéant des cloisons à l'extérieur de la gaine de calibrage hydraulique, puis on rapporte à l'extérieur et l'on fixe sur les entretoises l'enveloppe d'étanchéité externe.

Selon encore un autre mode de réalisation possible, on fabrique en premier lieu la paroi poreuse, on réalise ensuite la gaine de calibrage hydraulique par collage d'éléments souples munis de microperforations, sur la face externe de la paroi poreuse, on rapporte des entretoises et le cas échéant des cloisons à l'extérieur de la gaine de calibrage hydraulique, puis on rapporte à l'extérieur et l'on fixe sur les entretoises l'enveloppe d'étanchéité externe.

### Brève description des dessins

D'autres caractéristiques et avantages de l'invention ressortiront de la description suivante de modes particuliers de réalisation, en référence aux dessins annexés sur lesquels :
- la figure 1 est une vue en demi-coupe axiale d'un mode particulier de réalisation d'un dispositif de refroidissement par transpiration selon l'invention appliqué à une chambre de combustion de moteur-fusée,
- la figure 2 est une vue éclatée du mode de réalisation de la figure 1,
- la figure 3 est une vue en coupe, avec déshabillage progressif, selon la ligne III-III de la figure 1,
- la figure 4 représente une vue schématique en coupe axiale d'un second mode de réalisation de l'invention faisant apparaître la mise en oeuvre de cloisons de séparation dans le volume d'alimentation en ergol de refroidissement,
- la figure 5 est une vue de détail de la figure 4 agrandie montrant un exemple de cloison de séparation et d'entretoises,
- les figures 6 à 11 montrent les différentes phases de réalisation d'une enceinte conforme à l'invention, selon un procédé particulier, illustré en référence à la réalisation de la partie de paroi de la figure 5,
- la figure 12 est une vue en coupe, avec déshabillage progressif, d'un second mode de réalisation de l'invention, selon la ligne XII-XII de la figure 4,
- Les figures 13 et 14 sont une vue en élévation et une section d'une partie de l'ensemble cloison-entretoises disposé entre les parois externe d'étanchéité et interne de calibrage,
- les figures 15 et 16 sont des projections de la figure 13 respectivement sur l'enveloppe externe et sur la gaine de calibrage hydraulique montrant les liaisons soudées des entretoises et d'une cloison avec ces éléments,
- la figure 17 est une vue en demi-coupe axiale d'une chambre de combustion de moteur fusée équipée d'un dispositif de refroidissement selon l'invention, avec cloisons de séparation du volume d'alimentation en ergol et moyens individuels d'alimentation en fluide pour chacun des compartiments dudit volume d'alimentation,
- la figure 18 montre, en demi-coupe axiale, un exemple d'installation pour la fabrication d'une paroi poreuse d'une chambre de combustion de moteur-fusée équipée d'un dispositif de refroidissement par transpiration selon l'invention,
- la figure 19 est une vue de détail d'un dispositif d'alimentation en microbilles utilisable avec le dispositif de la figure 18,
- la figure 20 est une vue en demi-coupe axiale du dispositif de la figure 18 lors d'une étape ultérieure de fabrication,
- la figure 21 montre un exemple de liaison entre microbilles au sein d'un paroi poreuse à laquelle est applicable l'invention,
- les figures 22 et 23 montrent des exemples de réalisation de microperforations allongées réalisées dans une gaine de calibrage hydraulique d'un dispositif de refroidissement selon l'invention, et
- les figures 24 et 25 montrent selon des sections dans deux plans perpendiculaires, la coopération entre les microbilles d'une paroi poreuse et les microperforations d'une gaine de calibrage hydraulique appliquée contre la paroi poreuse conformément à l'invention.

### Description détaillée de modes particuliers de réalisation

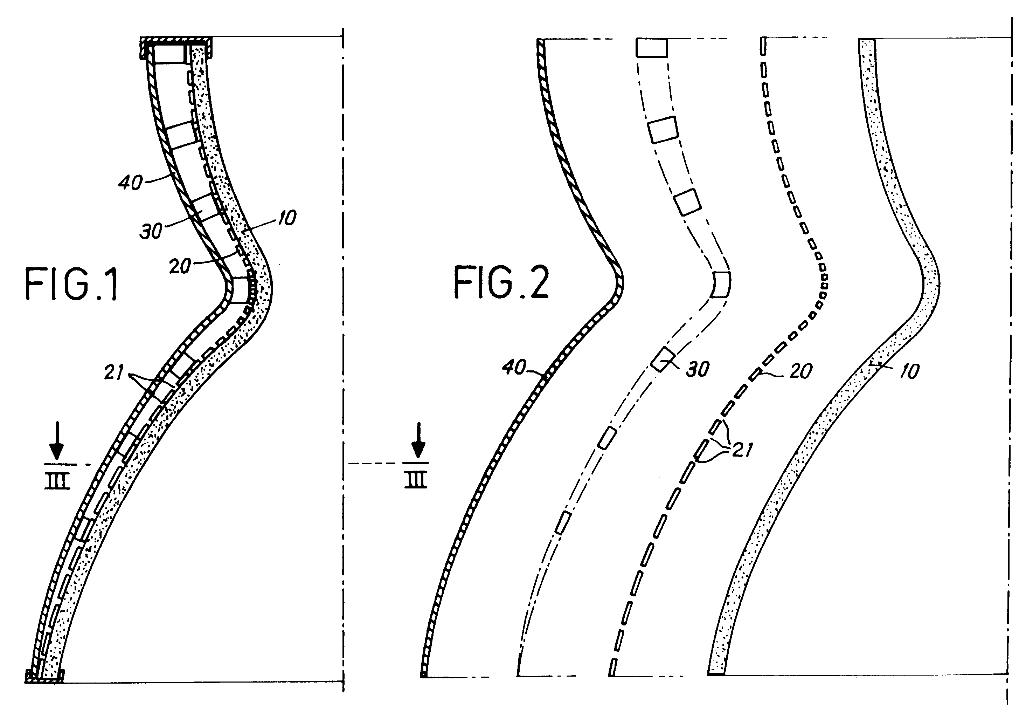

On se rapportera tout d'abord aux figures 1 à 3, qui illustrent, à titre d'exemple, une enceinte contenant des gaz chauds constituée par une chambre propulsive de moteur-fusée.

La partie interne de la chambre de combustion, qui est au contact du flux de gaz chauds, comprend une paroi poreuse 10 qui, d'une part assure la fonction d'une tuyère classique en confinant l'écoulement des gaz de combustion dans l'espace interne défini par cette paroi de révolution de forme convergente-divergente, et d'autre part permet de réaliser un échange thermique entre le flux thermique provenant des gaz de combustion et le fluide de refroidissement appliqué sur la face externe de la paroi poreuse 10 et destiné à "transpirer" à travers cette paroi.

La paroi poreuse 10 présente une structure perméable, avec une épaisseur qui peut être de l'ordre de 1 à 2 millimètres et une granulométrie pouvant être comprise par exemple entre environ 10 et 100µm.

La paroi poreuse 10 peut être par exemple en cuivre fritté ou autre matériau métallique élaboré par métallurgie des poudres à partir de microbilles.

Conformément à l'invention, une gaine de calibrage hydraulique 20, de forme identique à celle de la paroi poreuse 10 définissant l'enceinte de combustion, et présentant une épaisseur de l'ordre de quelques dixièmes de millimètre, est appliquée sur la surface externe de la paroi poreuse 10.

La gaine de calibrage hydraulique 20 qui est réalisée en un matériau étanche au fluide de refroidissement, peut être constituée par exemple par un feuillard métallique et se trouve perforée par une multiplicité de microperforations 21 réparties sur toute la surface de cette gaine 20. La gaine 20 est appliquée sur la surface externe de la paroi poreuse 10 de telle façon que la transpiration ne soit possible qu'à travers les trous.

Le dimensionnement et le choix du matériau de cette gaine, sont tels que la contrainte de frettage créée par la dilatation différentielle de la gaine par rapport à la paroi en fonctionnement à chaud, est tout à fait acceptable. Le fluide de refroidissement est alors préférentiellement un fluide cryotechnique, qui peut être soit un ergol, soit un autre fluide contenu dans un réservoir spécifique, et mû par la pompe spécifique.

La gaine 20 a pour fonction de régler localement le débit de l'écoulement de transpiration de façon à réaliser globalement une optimisation de la consommation en fluide de refroidissement.

Les microperforations 21 sont de densités et/ou de sections de passage inégales et réparties de telle manière que dans une zone donnée de la paroi 10, la surface de transpiration à travers la paroi poreuse 10 offerte par les trous 21 de la gaine 20 est d'autant plus élevée que le flux thermique arrivant sur la paroi est plus élevé dans cette zone. A titre d'exemple, et comme représenté sur les figures 1 et 2, les microperforations 21 peuvent être plus denses au niveau du col de la tuyère.

Les microperforations 21 qui, sur les figures du dessin sont représentées de façon agrandie pour la commodité de la lecture, présentent une très petite dimension, de l'ordre de quelques dizaines de micromètres, et une forme telle que des billes, légèrement plus grandes, ne puissent les traverser.

Comme on peut le voir sur la figure 1, une chambre annulaire d'alimentation en ergol de refroidissement est définie entre la gaine de calibrage hydraulique 20 et une enveloppe d'étanchéité externe 40 qui contribue à assurer le confinement du fluide de refroidissement, qui peut être un ergol tel que de l'hydrogène liquide par exemple, et participe à la tenue mécanique de l'ensemble. La chambre annulaire peut présenter une dimension transversale de l'ordre de quelques millimètres par exemple.

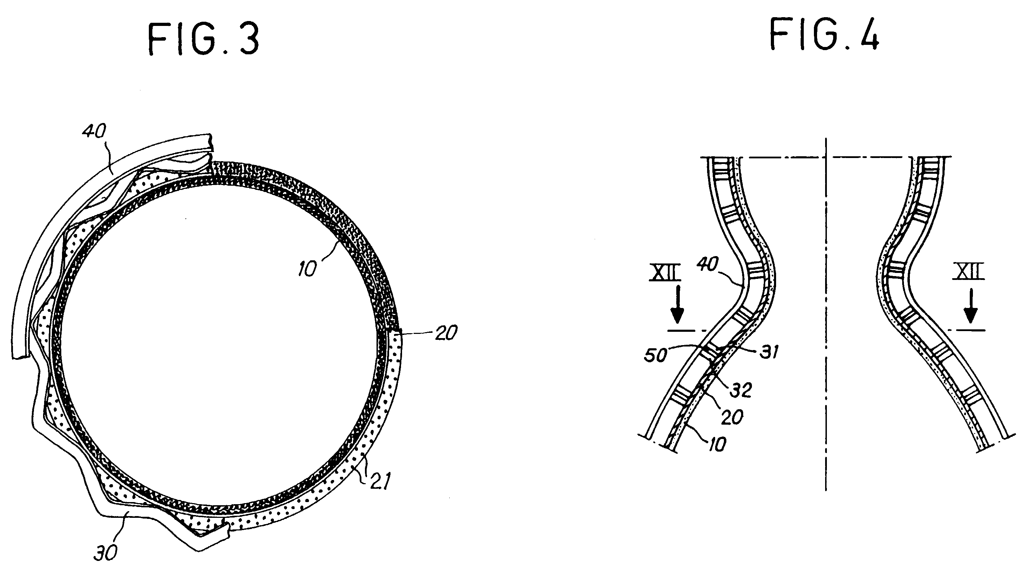

L'enveloppe d'étanchéité externe 40 présente une forme générale semblable à celle de la tuyère avec des parties convergente et divergente. L'enveloppe externe 40 peut présenter par exemple une épaisseur de l'ordre de un ou plusieurs millimètres et coopère avec des entretoises 30 qui sont situées à l'intérieur de la chambre annulaire d'alimentation et assurent une solidarisation de la gaine de calibrage hydraulique 20 et de l'enveloppe d'étanchéité externe 40. Les entretoises 30, qui peuvent être réalisées par exemple sous la forme de collerettes festonnées (figure 3) absorbent la pression du fluide de transpiration et évitent notamment le risque de flambage de la partie basse du divergent. Si les entretoises sont suffisamment rapprochées, les épaisseurs de la paroi interne poreuse et de la paroi externe, peuvent être relativement minces. Elles peuvent aussi être évolutives selon les zones. Il est également possible de réaliser ces entretoises sous forme d'un profilé, par exemple en H, et de les disposer radialement, c'est à dire perpendiculairement à la gaine 20.

Sur la figure 1, on a représenté une chambre annulaire d'alimentation en ergol de refroidissement qui présente un volume de section débitant évolutive de façon à maintenir une vitesse d'ergol sensiblement constante, et par suite une pression dynamique d'alimentation constante, tout le long de la gaine 20, de sorte que seule la densité variable des microperforations 21 assure dans les différentes zones de la paroi 10 un contrôle du débit surfacique local appliqué à cette paroi 10, qui peut évoluer de façon tout-à-fait progressive.

Dans le mode de réalisation des figures 1 à 3, l'ergol de refroidissement est introduit dans la chambre annulaire d'alimentation à la partie supérieure de celle-ci, de sorte que la section de cette chambre annulaire d'alimentation est la plus grande à la partie supérieure de la chambre de combustion, et se réduit progressivement jusqu'à l'extrémité inférieure du divergent.

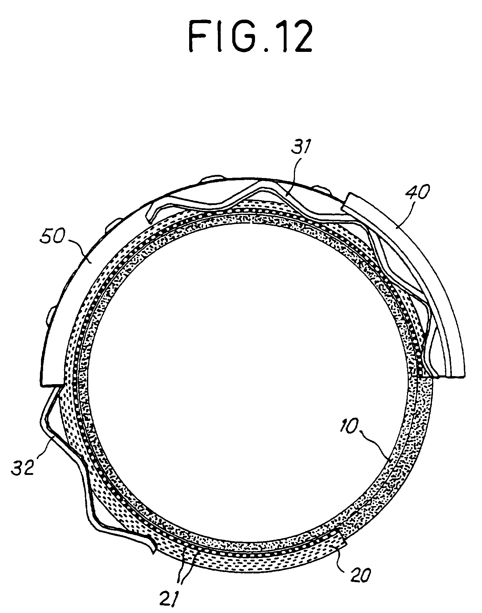

Si l'on se reporte maintenant aux figures 4 à 12, on voit un second mode de réalisation dans lequel des cloisons étanches 50, qui sont disposées dans des plans sensiblement perpendiculaires à la paroi poreuse 10 et à l'axe de la tuyère, sont disposées entre deux entretoises 31,32 à différents niveaux de la chambre propulsive entre la gaine de calibrage hydraulique 20 et l'enveloppe d'étanchéité externe 40.

Ces cloisons 50 contribuent, comme les entretoises 31,32 à rigidifier la structure d'ensemble mais permettent surtout de définir, à l'intérieur de la chambre annulaire d'alimentation en fluide, une pluralité de compartiments annulaires 33 présentant des pressions différentes, qui sont étagés le long de la chambre propulsive, de façon à permettre une meilleure adaptation aux pressions créées à l'intérieur de la chambre propulsive par les gaz chauds sur les zones correspondantes de la paroi poreuse 10. Le débit surfacique local du fluide de refroidissement appliqué à la paroi poreuse 10 à travers la gaine 20 reste naturellement contrôlé dans chaque compartiment d'alimentation par la densité de microperforations qui peut elle-même être évolutive au sein de chaque compartiment 33.

Le mode de réalisation à cloisons 50 définissant une pluralité de compartiments 33 d'alimentation en fluide de refroidissement à l'extérieur de la gaine de calibrage hydraulique offre ainsi la meilleure souplesse dans le contrôle du processus de refroidissement par transpiration.

L'alimentation en fluide de chacun des compartiments 33 séparés par les cloisons 50 peut être réalisée de manière interne, par communication des différents compartiments entre eux par des orifices de détente calibrés. Ce mode de réalisation ne permet toutefois pas d'effectuer un réglage séparé des débits d'alimentation pour les différents compartiments 33.

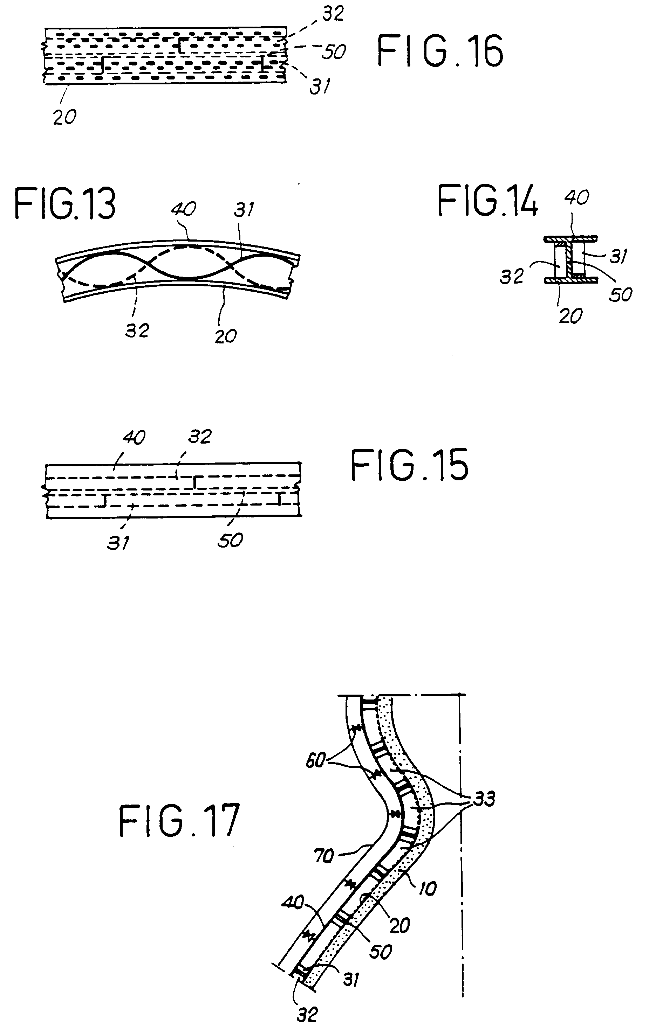

Aussi, comme on l'a représenté sur la figure 17, l'alimentation en fluide de chacun des compartiments 33 peut être réalisée de façon externe à l'enveloppe d'étanchéité 40, par des lignes d'alimentation 70 qui peuvent débiter de façon adaptée pour chacun des compartiments 33 à travers des dispositifs de répartition de débit tels que des vannes individuelles 60.

Les canalisations d'alimentation en ergol de refroidissement, les dispositifs de répartition de débit et la chambre annulaire d'alimentation peuvent présenter des configurations variées dans le but d'optimiser le débit traversant la gaine de calibrage hydraulique 20 dans les différentes zones de la chambre propulsive, la gaine 20 assurant elle-même le contrôle fin du débit surfacique de fluide de transpiration traversant la paroi poreuse 10 dans toutes les zones de la chambre propulsive.

A titre d'exemple, la consommation du système de refroidissement selon l'invention peut être compris entre 5 et 10% du débit total d'ergol, lorsque le combustible utilisé est l'hydrogène et la température de paroi est de 700K.

Dans de telles conditions, le flux thermique à travers la paroi peut être compris entre 10 mégawatts/m en sortie du divergent et 60MW/m au niveau du col, la perte de charge à travers la paroi peut être de l'ordre de quelques millibars et le débit surfacique peut être de l'ordre de 1kg/m.seconde.

On décrira maintenant, à titre d'exemples, divers procédés de fabrication d'une enceinte, telle qu'une chambre propulsive de moteur-fusée, mettant en oeuvre un système de refroidissement par transpiration selon l'invention.

Selon un premier type de procédé de fabrication, la paroi poreuse 10 qui peut être réalisée par exemple à partir de matériaux frittés, est préalablement réalisée selon des techniques traditionnelles pour constituer un noyau autour duquel on vient apporter la gaine 20 de calibrage hydraulique.

Selon une première variante de réalisation, la gaine est appliquée sur la paroi 10 par déformation élastique à chaud. On notera qu'en fonctionnement la paroi poreuse 10 est toujours plus chaude que la gaine 20 qui est refroidie par le liquide de transpiration. La contrainte de frettage souhaitée à chaud est donc facile à obtenir.

Selon une autre variante de réalisation, la gaine 20 est formée d'éléments souples collés sur la paroi poreuse 10. La gaine 20 peut dans ce cas être formée d'éléments découpés, ou d'un ruban enroulé sur la paroi dans la mesure où la géométrie de la chambre propulsive le permet.

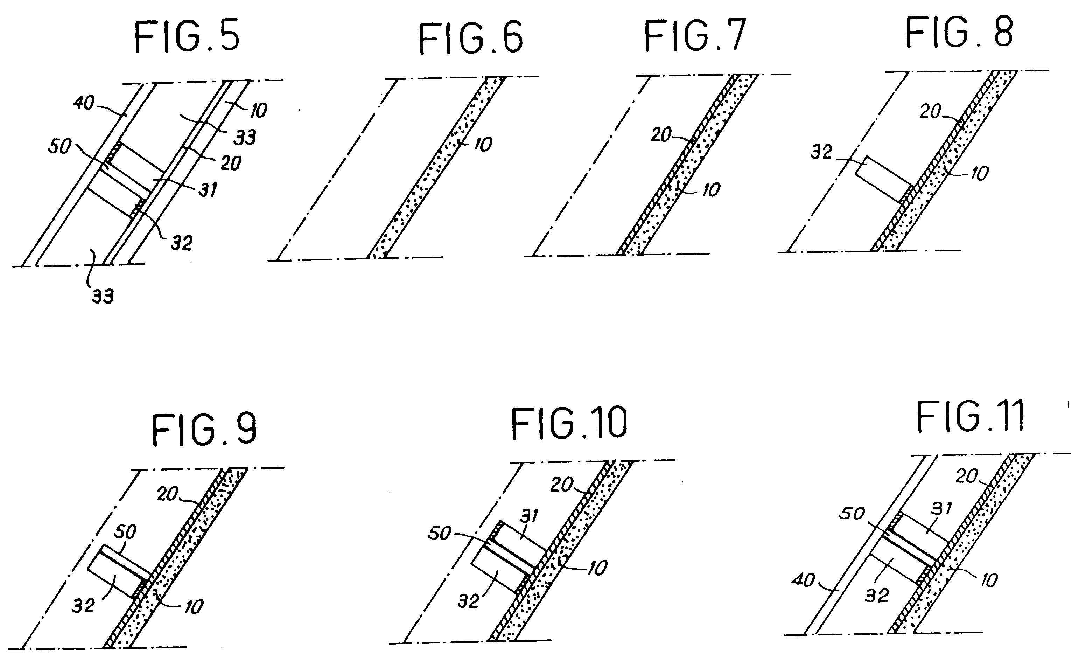

Les entretoises 30,31,32, les cloisons 50 et l'enveloppe d'étanchéité externe 40 ainsi que les dispositifs de canalisation et de répartition du débit dans le volume d'alimentation peuvent être rapportés ensuite sur l'ensemble de base constitué par la paroi poreuse 10 munie de sa gaine 20 de la même manière que dans les modes de réalisation qui seront décrits plus loin pour lesquels ces éléments sont montés sur la gaine seule. Un exemple de séquence d'assemblage selon ce procédé est décrit sur les figures 6 à 11 qui montrent les opérations successives d'un tronçon de chambre tel que celui de la figure 5.

Selon un second type de procédé de fabrication, la gaine de calibrage hydraulique 20 est réalisée dans une première étape et constitue une coque rigide sur la face interne de laquelle la paroi poreuse 10 pourra ensuite être rapportée.

La gaine 20 peut dans ce cas être réalisée par hydroformage ou déformation superplastique. Toutefois, ces procédés sont susceptibles d'engendrer des contraintes internes qu'il convient ensuite d'éliminer.

Aussi, selon un mode de réalisation préférentiel, la gaine 20 est réalisée à partir d'un feuillard métallique plan qui sert à la fabrication, par découpage et soudage , d'anneaux de forme tronconique qui sont ensuite assemblés par soudage pour constituer la forme finale convergente divergente. Un tel procédé constitue une solution économique qui présente l'avantage de ne pas engendrer de contraintes internes.

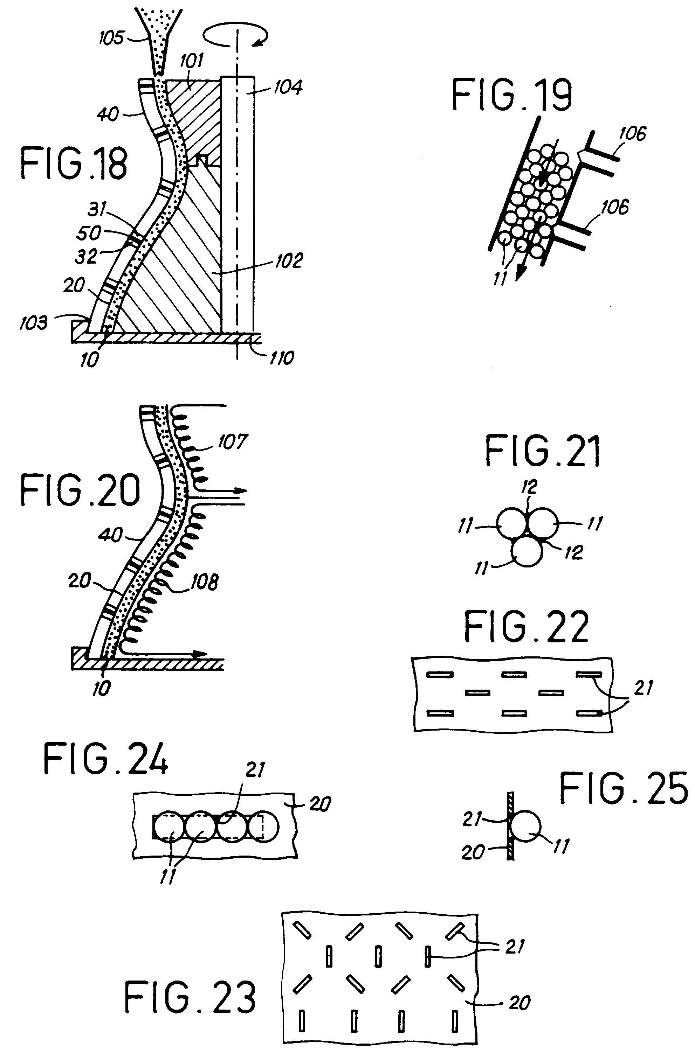

Les microperforations 21 peuvent être formées dans la gaine 20 par découpe au laser par exemple. La densité de perforation pour un motif de perçage donné est établie expérimentalement. Les microperforations 21 peuvent avantageusement présenter une forme allongée, par exemple sous la forme de fentes rectangulaires (figures 22 à 25) de façon à éviter l'occultage par les microbilles sphériques 11 dans le cas d'une paroi poreuse 10 en matériau fritté. Les microbilles sphériques 11 doivent dans ce cas présenter une dimension légèrement supérieure à la plus petite dimension des fentes 21.

Les microperforations 21 peuvent être réparties selon des motifs plus ou moins ordonnés (figures 22 et 23). La densité des perforations 21, leur orientation dans une certaine mesure, et leur taille peuvent être adaptées pour assurer l'adaptation du débit surfacique aux différentes zones de la chambre propulsive. Ces paramètres dépendent du flux thermique auquel est soumise la paroi poreuse dans la zone considérée et de la différence de pression entre son compartiment 33 d'alimentation en ergol et la chambre de combustion.

Un procédé de perçage au laser permet dans tous les cas une réalisation de configurations très diverses.

Les entretoises 31,32 et les cloisons 50 sont réalisées à partir de tôles planes découpées en secteurs annulaires, pré-pliées pour les entretoises 31,32 qui présentent avantageusement la forme de collerettes festonnées puis soudées sur place sur la gaine de calibrage hydraulique 20.

Les figures 6 à 11 montrent la mise en place d'une entretoise 32, d'une cloison 50, puis d'une deuxième entretoise 31 avant la réalisation de l'enveloppe externe 40, dans le cas d'une gaine 20 déjà réalisée sur la paroi interne 10, mais le processus est le même en cas de réalisation préalable de la gaine 20 seule sous la forme d'une coque rigide. Les figures 13 à 16 permettent également de voir les zones de soudage des entretoises 31,32 et d'une cloison 50 sur la gaine perforée 20 puis sur l'enveloppe externe 40.

L'enveloppe d'étanchéité externe 40 peut être réalisée selon des procédés identiques à ceux de la gaine 20.

Dans le cas de la technique de la déformation superplastique ou de l'hydroformage, on réalise séparément deux demi-coques qui sont ensuite soudées.

La solution la plus économique, qui peut d'ailleurs faire l'objet d'une exécution robotisée, est constituée par un procédé d'assemblage d'anneaux tronconiques obtenus à partir de la découpe d'un feuillard plan.

On notera que le soudage des entretoises 31,32 et des cloisons 50 sur l'enveloppe 40 est réalisé en aveugle après la mise en place de cette dernière, la localisation des entretoises pouvant être effectuée par ultrasons.

Un fois que l'ensemble constitué par la gaine 20, l'enveloppe 40 et les entretoises 31,32 et cloisons 50 est réalisé, on procède à la formation de la paroi poreuse 10, par dépôt appliqué sur l'intérieur de la gaine 20 réalisée par exemple par plasmaformage ou par une technique de la métallurgie des poudres.

A titre d'exemple, on décrira en référence aux figures 18 à 21 la réalisation de la paroi poreuse transpirante 10 dans un agencement qui utilise un volume de moulage préalablement réalisé avec d'une part pour matrice externe la gaine de calibrage hydraulique 20 équipée, précédemment réalisée, et d'autre part pour matrice interne un mandrin en deux parties 101,102 disposées respectivement en vis-à-vis de la partie convergente et en vis-à-vis de la partie divergente.

L'ensemble est positionné au moyen d'un outil 110 présentant un rainurage annulaire 103 pour le positionnement de la matrice externe et un moyeu central 104 pour le positionnement des deux parties 101,102 du mandrin (figure 18).

Le volume de moulage est rempli, à l'aide d'une trémie 105, d'un mélange granulaire constitué de microbilles sphériques 11 en matériau métallique accompagnées de grains de matériau de brasure 12 de dimension interstitielle (figure 21).

Pour effectuer un remplissage maximal du volume de moulage, on peut procéder à une mise en vibration de l'ensemble du dispositif à l'aide de l'outil 110, ou à une mise en rotation de celui-ci, un rainurage hélicoïdal 106 constituant un système de vis d'Archimède pouvant le cas échéant être réalisé sur le mandrin 101, 102 pour favoriser l'avance des microbilles et leur mise en contact avec le matériau de brasure 12 (figure 19).

L'ensemble est ensuite chauffé de façon à réaliser la fusion du matériau de brasage venant former des ponts de matière 12 entre les microbilles 11.

Le chauffage peut être réalisé par introduction de l'ensemble dans un four ou au moyen de résistances chauffantes 107,108 placées à l'intérieur du mandrin 101,102 (figure 20), ce qui constitue un procédé plus rapide et plus économique du point de vue énergétique.

Au cours d'une étape finale, une ou plusieurs brides sont installées pour la raccordement des lignes d'alimentation en fluide de refroidissement.

## Revendications

1. Enceinte contenant des gaz chauds refroidie par transpiration, comprenant une paroi poreuse (10) formant la partie interne de l'enceinte, et des moyens d'application d'un fluide de refroidissement sur la face externe de la paroi poreuse (10) pour faire passer un débit de fluide de refroidissement par transpiration à travers la paroi poreuse (10), comportant une gaine de calibrage hydraulique (20) appliquée sur la face externe de la paroi poreuse (10) et constituée d'un matériau étanche au fluide de refroidissement et un volume d'alimentation en fluide de refroidissement ménagé entre la gaine de calibrage hydraulique (20) solidaire de la paroi poreuse, et une enveloppe (40) d'étanchéité externe de l'enceinte, la gaine de calibrage hydraulique étant perforée d'une multiplicité de microperforations (21) dont la densité de répartition varie de façon progressive selon diverses zones de la paroi de l'enceinte et se trouve d'autant plus grande que le flux thermique arrivant sur la paroi poreuse à refroidir est plus élevé, permettant ainsi l'application d'un débit surfacique prédéterminé sur la gaine de calibrage hydraulique (20) dans les différentes zones de la paroi de l'enceinte, des entretoises (30;31;32) étant interposées entre la gaine de calibrage hydraulique (20) et l'enveloppe (40) d'étanchéité externe, la paroi poreuse (10) étant constituée d'un matériau fritté réalisé par agglomération de billes métalliques (11) dont les dimensions sont légèrement plus grandes que la plus petite dimension des microperforations (21) de la gaine de calibrage hydraulique (20).

2. Enceinte selon la revendication 1, caractérisée en ce que des cloisons (50) sont en outre interposées entre la gaine de calibrage hydraulique (20) et l'enveloppe (40) d'étanchéité externe pour définir dans le volume d'alimentation en fluide de refroidissement, des compartiments à des pressions différentes correspondant à différentes zones de la paroi de l'enceinte.

3. Enceinte selon la revendication 1, caractérisée en ce que le volume d'alimentation en fluide de refroidissement défini entre la gaine de calibrage (20) et l'enveloppe d'étanchéité externe (40) comprend un compartiment unique de section évolutive selon les différentes zones de la paroi de l'enceinte.

4. Enceinte selon la revendication 2, caractérisée en ce que des orifices de passage calibrés sont ménagés dans les cloisons (50) pour assurer une évolution prédéterminée du débit du fluide de refroidissement d'un compartiment à l'autre.

5. Enceinte selon la revendication 2, caractérisée en ce que des vannes (60) reliées à des tuyauteries extérieures (70) à ladite enveloppe (40) d'étanchéité externe alimentent séparément les compartiments correspondant aux différentes zones de la paroi de l'enceinte pour assurer, dans chaque compartiment, l'alimentation d'un débit de fluide de refroidissement donné réglable indépendamment du débit de fluide de refroidissement dans les compartiments voisins.

6. Enceinte selon l'une quelconque des revendications 1 à 5, caractérisée en ce que la gaine de calibrage hydraulique (20) présente des microperforations (21) constituées par des fentes allongées.

7. Enceinte selon l'une quelconque des revendications 1 à 6, caractérisée en ce que les microperforations (21) de la gaine de calibrage hydraulique (20) présentent une plus petite dimension, de l'ordre de quelques dizaines de micromètres.

8. Enceinte selon l'une quelconque des revendications 1 à 7, caractérisée en ce que la gaine de calibrage hydraulique (20) présente une épaisseur de l'ordre de quelques dixièmes de millimètre.

9. Enceinte selon l'une quelconque des revendications 1 à 8, caractérisée en ce que les entretoises (30,31,32) sont réalisées sous la forme de collerettes festonnées.

10. Enceinte selon l'une quelconque des revendications 1 à 8, caractérisée en ce que les entretoises sont formées d'un élément de profilé et disposées perpendiculairement à la gaine de calibrage hydraulique (20).

11. Enceinte selon l'une quelconque des revendications 1 à 10, caractérisée en ce que le fluide de refroidissement est issu d'un réservoir spécifique et mû par une pompe spécifique.

12. Enceinte selon la revendication 11, caractérisée en ce que le fluide de refoidissement est un fluide cryotechnique.

13. Enceinte selon l'une quelconque des revendications 1 à 12, caractérisée en ce qu'elle est constituée par une chambre propulsive de moteur-fusée.

14. Procédé de fabrication d'une enceinte selon l'une quelconque des revendications 1 à 5, caractérisé en ce que l'on fabrique en premier lieu la gaine de calibrage hydraulique (20) à partir d'une tôle munie de microperforations pour former une coque rigide mise en forme, on rapporte ensuite des entretoises (31,32) et le cas échéant des cloisons (50) qui sont soudées sur la face externe de la gaine de calibrage hydraulique (20), on rapporte et on soude sur les entretoises (31,32) et les cloisons (50) à l'extérieur de celles-ci, une enveloppe externe d'étanchéité (40) et on réalise la paroi poreuse (10) par un dépôt appliqué sur la face interne de la gaine de calibrage hydraulique (20).

15. Procédé selon la revendication 14, caractérisé en ce que pour réaliser la gaine de calibrage hydraulique (20) on forme d'abord à partir d'un feuillard métallique plan des anneaux, par découpage et soudage, on assemble les anneaux par soudage pour définir une gaine dont la forme correspond à celle de l'enceinte à réaliser et on procède à des découpes au laser pour former les microperforations(21) avec des densités locales de perforation variables.

16. Procédé selon la revendication 14 ou la revendication 15, caractérisé en ce que l'enveloppe d'étanchéité externe (40) est réalisée à partir de la découpe d'un feuillard plan pour former des anneaux qui sont assemblés par soudage sur les entretoises et cloisons solidaires de la gaine de calibrage hydraulique (20), l'enveloppe d'étanchéité externe (40) étant soudée en aveugle sur les entretoises (31,32) et cloisons (50).

17. Procédé selon la revendication 14, caractérisé en ce que la gaine de calibrage hydraulique (20) et l'enveloppe d'étanchéité externe (40) sont réalisées par déformation superplastique ou hydroformage, sous la forme de deux demi-coques réalisées séparément puis soudées.

18. Procédé selon l'une quelconque des revendications 14 à 17, caractérisé en ce que la paroi poreuse (10) est réalisée par la technique de la métallurgie des poudres en utilisant comme matrice externe la gaine de calibrage hydraulique (20) rendue solidaire de l'enveloppe d'étanchéité externe (40) par les entretoises (31,32) et cloisons (50) et comme matrice interne un mandrin en deux parties (101,102), et en ce que le volume de moulage dans lequel doit être formée la paroi poreuse (10) est rempli d'un mélange granulaire constitué de microbilles sphériques (11) en matériau métallique accompagnées de grains de matériau de brasure de dimension interstitielle, et en ce que l'ensemble est ensuite chauffé de façon à réaliser la fusion du matériau de brasage venant former des ponts (12) entre les microbilles (11).

19. Procédé de fabrication d'une enceinte selon l'une quelconque des revendications 1 à 5, caractérisé en ce que l'on fabrique en premier lieu la paroi poreuse (10), on applique ensuite la gaine de calibrage hydraulique (20) sur la face externe de la paroi poreuse (10) par déformation élastique à chaud, on rapporte des entretoises (30) et le cas échéant des cloisons (50) à l'extérieur de la gaine de calibrage hydraulique (20), puis on rapporte à l'extérieur et l'on fixe sur les entretoises (30) l'enveloppe (40) d'étanchéité externe.

20. Procédé de fabrication d'une enceinte selon l'une quelconque des revendications 1 à 5, caractérisé en ce que l'on fabrique en premier lieu la paroi poreuse (10), on réalise ensuite la gaine de calibrage hydraulique (20) par collage d'éléments souples munis de microperforations, sur la face externe de la paroi poreuse (10), on rapporte des entretoises (30) et le cas échéant des cloisons (50) à l'extérieur de la gaine de calibrage hydraulique (20) par insertion de ces entretoises et cloisons dans la paroi poreuse, à travers la gaine, puis on rapporte à l'extérieur et l'on fixe sur les entretoises (30) l'enveloppe (40) d'étanchéité externe.

## Patentansprüche

1. Behälter, der heiße Gase enthält und durch Transpiration gekühlt wird und der eine poröse Wand (10), die den inneren Teil des Behälters bildet, sowie Mittel für die Beaufschlagung der äußeren Fläche der porösen Wand (10) mit einem Kühlungsfluid enthält, mit denen ein Transpirationskühlungsfluid-Durchsatz durch die poröse Wand (10) geschaffen wird, mit einem Hydraulikkalibrierungsmantel (20), der auf die äußere Fläche der porösen Wand (10) aufgebracht und aus einem gegenüber dem Kühlungsfluid dichten Material gebildet ist, und einem Volumen für die Versorgung mit Kühlungsfluid, das zwischen dem mit der porösen Wand verbundenen Hydraulikkalibrierungsmantel (20) und einer dem Behälter äußeren Dichtungshülle (40) ausgebildet ist, wobei der Hydraulikkalibrierungsmantel (20) mit mehreren Mikroperforationen (21) perforiert ist, deren Verteilungsdichte sich progressiv entsprechend den verschiedenen Zonen der Wand des Behälters verändert und um so größer ist, je höher die thermische Strömung ist, die die zu kühlende poröse Wand erreicht, wodurch die Aufbringung eines vorgegebenen Oberflächendurchsatzes auf den Hydraulikkalibrierungsmantel (20) in den verschiedenen Zonen der Wand des Behälters ermöglicht wird, wobei zwischen dem Hydraulikkalibrierungsmantel (20) und der äußeren Dichtungshülle (40) Abstandhalter (30; 31; 32) eingefügt sind, wobei die poröse Wand (10) aus einem gesinterten Material gebildet ist, das durch Verdichtung von metallischen Kugeln (11) verwirklicht ist, deren Abmessungen etwas größer als die kleinste Abmessung der Mikroperforationen (21) des Hydraulikkalibrierungsmantels (20) sind.

2. Behälter nach Anspruch 1, dadurch gekennzeichnet, daß außerdem zwischen den Hydraulikkalibrierungsmantel (20) und die äußere Dichtungshülle (40) Trennwände (50) eingefügt sind, um in dem Volumen für die Versorgung mit Kühlungsfluid Fächer mit unterschiedlichen Drücken zu definieren, die den verschiedenen Zonen der Wand des Behälters entsprechen.

3. Behälter nach Anspruch 1, dadurch gekennzeichnet, daß das Volumen für die Versorgung mit Kühlungsfluid, das zwischen dem Kalibrierungsmantel (20) und der äußeren dichten Hülle (40) definiert ist, ein einziges Fach enthält, dessen Querschnitt sich entsprechend den verschiedenen Zonen der Wand des Behälters verändert.

4. Behälter nach Anspruch 2, dadurch gekennzeichnet, daß in den Trennwänden (50) kalibrierte Durchlaßöffnungen ausgebildet sind, um eine vorgegebene Veränderung des Kühlungsfluiddurchsatzes von einem Fach zum nächsten zu gewährleisten.

5. Behälter nach Anspruch 2, dadurch gekennzeichnet, daß Schieber (60), die mit der äußeren Dichtungshülle (40) äußerlichen Röhrenleitungen (70) verbunden sind, die Fächer entsprechend den verschiedenen Zonen der Wand des Behälters getrennt versorgen, um in jedem Fach die Versorgung mit einem gegebenen Kühlungsfluiddurchsatz sicherzustellen, der unabhängig vom Kühlungsfluiddurchsatz in den benachbarten Fächern einstellbar ist.

6. Behälter nach irgendeinem der Ansprüche 1 bis 5, dadurch gekennzeichnet, daß der Hydraulikkalibrierungsmantel (20) Mikroperforationen (21) aufweist, die durch langgestreckte Schlitze gebildet sind.

7. Behälter nach irgendeinem der Ansprüche 1 bis 6, dadurch gekennzeichnet, daß die Mikroperforationen (21) des Hydraulikkalibrierungsmantels (20) eine kleinere Abmessung in der Größenordnung von einigen zehn Mikrometern aufweisen.

8. Behälter nach irgendeinem der Ansprüche 1 bis 7, dadurch gekennzeichnet, daß der Hydraulikkalibrierungsmantel (20) eine Dicke in der Größenordnung von einigen Zehntelmillimetern aufweist.

9. Behälter nach irgendeinem der Ansprüche 1 bis 8, dadurch gekennzeichnet, daß die Abstandhalter (30, 31, 32) in Form von gewellten Ringen verwirklicht sind.

10. Behälter nach irgendeinem der Ansprüche 1 bis 8, dadurch gekennzeichnet, daß die Abstandhalter aus einem Profilelement gebildet sind und senkrecht zum Hydraulikkalibrierungsmantel (20) angeordnet sind.

11. Behälter nach irgendeinem der Ansprüche 1 bis 10, dadurch gekennzeichnet, daß das Kühlungsfluid von einem spezifischen Vorratsbehälter ausgegeben und durch eine spezifische Pumpe bewegt wird.

12. Behälter nach Anspruch 11, dadurch gekennzeichnet, daß das Kühlungsfluid ein Tieftemperaturfluid ist.

13. Behälter nach irgendeinem der Ansprüche 1 bis 12, dadurch gekennzeichnet, daß er durch eine Raketenantrieb-Vortriebskammer gebildet ist.

14. Verfahren zum Herstellen eines Behälters nach irgendeinem der Ansprüche 1 bis 5, dadurch gekennzeichnet, daß zunächst der Hydraulikkalibrierungsmantel (20) ausgehend von einem mit Mikroperforationen versehenen Blech gebildet wird, um eine starre Schale zu formen, daß anschließend Abstandhalter (31, 32) und gegebenenfalls Trennwände (50) angefügt werden, die auf der äußeren Fläche des Hydraulikkalibrierungsmantels (20) verschweißt werden, daß am äußeren Ende der Abstandhalter (31, 32) und der Trennwände (50) eine äußere Dichtungshülle (40) angefügt und verschweißt wird und daß die poröse Wand (10) durch Abscheidung verwirklicht wird, die auf die innere Fläche des Hydraulikkalibrierungsmantels (20) aufgebracht wird.

15. Verfahren nach Anspruch 14, dadurch gekennzeichnet, daß für die Verwirklichung des Hydraulikkalibrierungsmantels (20) zunächst ausgehend von einem ebenen metallischen Band durch Ausstanzen und Verschweißen Ringe gebildet werden, daß die Ringe durch Verschweißen zusammengefügt werden, um einen Mantel zu definieren, dessen Form derjenigen des zu verwirklichenden Behälters entspricht, und daß Laserschneidevorgänge ausgeführt werden, um die Mikroperforationen (21) mit lokal veränderlichen Perforationsdichten zu bilden.

16. Verfahren nach Anspruch 14 oder Anspruch 15, dadurch gekennzeichnet, daß die äußere Dichtungshülle (40) ausgehend von Zerschneiden eines ebenen Bandes verwirklicht wird, um Ringe zu bilden, die durch Verschweißen an den Abstandhaltern und Trennwänden, die mit dem Hydraulikkalibrierungsmantel (20) verbunden sind, zusammengefügt werden, wobei die äußere Dichtungshülle (40) blind an die Abstandhalter (31, 32) und die Trennwände (50) geschweißt wird.

17. Verfahren nach Anspruch 14, dadurch gekennzeichnet, daß der Hydraulikkalibrierungsmantel (20) und die äußere Dichtungshülle (40) durch superplastische Verformung oder Hydroformung in Form von zwei Halbschalen, die getrennt verwirklicht und dann verschweißt werden, verwirklicht werden.

18. Verfahren nach irgendeinem der Ansprüche 14 bis 17, dadurch gekennzeichnet, daß die poröse Wand (10) durch die Pulvermetallurgie-Technik verwirklicht wird, indem als äußerer Grundkörper der Hydraulikkalibrierungskörper (20) verwendet wird, der mit der äußeren Dichtungshülle (40) durch die Abstandhalter (31, 32) und die Trennwände (50) verbunden gehalten wird, und indem als innerer Grundkörper ein Dorn aus zwei Teilen (101, 102) verwendet wird, und daß das Gießvolumen, in dem die poröse Wand (10) gebildet werden soll, mit einem körnigen Gemisch gefüllt wird, das aus Mikrokugeln (11) aus Metallmaterial gebildet ist, das von Körnern aus Lötmaterial mit Zwischenraumgröße begleitet wird, und daß die Gesamtheit anschließend erhitzt wird, um das Schmelzen des Lötmaterials zu bewirken, das zwischen den Mikrokugeln (11) Brücken (12) bildet.

19. Verfahren zum Herstellen eines Behälters nach irgendeinem der Ansprüche 1 bis 5, dadurch gekennzeichnet, daß zunächst die poröse Wand (10) gebildet wird, daß anschließend auf die äußere Fläche der porösen Wand (10) durch elastische Wärmeverformung der Hydraulikkalibrierungsmantel (20) aufgebracht wird, daß Abstandhalter (30) und gegebenenfalls Trennwände (50) an der Außenseite des Hydraulikkalibrierungsmantels (20) angefügt werden und daß dann an die Abstandhalter (30) die äußere Dichtungshülle (40) von außen angefügt und befestigt wird.

20. Verfahren zum Herstellen eines Behälters nach irgendeinem der Ansprüche 1 bis 5, dadurch gekennzeichnet, daß zunächst die poröse Wand (10) hergestellt wird, daß anschließend der Hydraulikkalibrierungsmantel (20) durch Verkleben von mit Mikroperforationen versehenen elastischen Elementen auf der äußeren Fläche der porösen Wand (10) verwirklicht wird, daß Abstandhalter (30) und gegebenenfalls Trennwände (50) außerhalb des Hydraulikkalibrierungsmantels (20) durch Einschieben dieser Abstandhalter und dieser Trennwände in die poröse Wand durch den Mantel hindurch angefügt werden und daß dann an die Abstandhalter (30) die äußere Dichtungshülle (40) von außen angefügt und befestigt wird.

## Claims

1. Enclosure containing hot gases cooled by transpiration, comprising a porous wall (10) forming the inside portion of the enclosure, and means for applying a cooling fluid over the outside face of the porous wall (10) to cause cooling fluid to flow by transpiration through the porous wall (10), comprising a hydraulic calibration sheath (20) applied on the outside face of the porous wall (10) and constituted by a material that is proof to the cooling fluid, and a cooling fluid feed volume formed between the hydraulic calibration sheath (20) secured to the porous wall, and an outer sealing envelope (40) of the enclosure, the hydraulic calibration sheath being perforated by a multiplicity of microperforations (21) whose distribution density varies progressively over various zones of the wall of the enclosure and is greater where the heat flow to be cooled and reaching the porous wall is greater, thereby enabling a predetermined flow rate per unit area to be applied through the hydraulic calibration sheath (20) in the various zones of the enclosure wall, spacers (30; 31; 32) being interposed between the hydraulic calibration sheath (20) and the outer sealing envelope (40), the porous wall (10) being constituted by a sintered material made by compacting together metal beads (11) whose dimensions are slightly greater than the smallest dimension of the microperforations (21) through the hydraulic calibration sheath (20).

2. Enclosure according to claim 1, characterized in that partitions (50) are also interposed between the hydraulic calibration sheath (20) and the outer sealing envelope (40) to define compartments in the cooling fluid feed volume that are at different pressures and that correspond to different zones of the enclosure wall.

3. Enclosure according to claim 1, characterized in that the cooling fluid feed volume defined between the calibration sheath (20) and the outer sealing envelope (40) comprises a single compartment of section that varies over the different zones of the enclosure wall.

4. Enclosure according to claim 2, characterized in that calibrated through orifices are formed in the partitions (50) to provide a predetermined variation in the cooling fluid flow rate from one compartment to another.

5. Enclosure according to claim 2, characterized in that valves (60) connected to pipeworks (70) outside said external sealing envelope (40) provide separate feeds to compartments corresponding to different zones of the wall of the enclosure so as to ensure that in each compartment the cooling fluid feed is at a given flow rate that is adjustable independently of the flow rate of the cooling fluid in the adjacent compartments.

6. Enclosure according to any one of claims 1 to 5, characterized in that the hydraulic calibration sheath (20) has microperforations (21) constituted by elongate slots.

7. Enclosure according to any one of claims 1 to 6, characterized in that the microperforations (21) through the hydraulic calibration sheath (20) are of smaller dimension, of the order of a few tens of micrometers.

8. Enclosure according to any one of claims 1 to 7, characterized in that the hydraulic calibration sheath (20) has a thickness of the order of a few tenths of a millimeter.

9. Enclosure according to any one of claims 1 to 8, characterized in that the spacers (30, 31, 32) are made in the form of scalloped collars.

10. Enclosure according to any one of claims 1 to 8, characterized in that the spacers are made from a section member and are disposed perpendicularly to the hydraulic calibration sheath (20).

11. Enclosure according to any one of claims 1 to 10, characterized in that the cooling fluid comes from a special tank and is driven by a special pump.

12. Enclosure according to claim 11, characterized in that the cooling fluid is a cryogenic fluid.

13. Enclosure according to any one of claims 1 to 12, characterized in that it is constituted by a rocket engine thrust chamber.

14. Method of manufacturing an enclosure according to any one of claims 1 to 5, characterized in that it consists in first making the hydraulic calibration sheath (20) from a microperforated sheet metal to form a shaped rigid shell, then applying thereto spacers (31, 32) and optionally partitions (50), the spacers being welded to the outside face of the hydraulic calibration sheath (20), placing and welding an outer sealing envelope (40) on the outside of the spacers (31, 32) and the partitions (50), and making the porous wall (10) by applying a deposit onto the inside face of the hydraulic calibration sheath (20).

15. Method according to claim 14, characterized in that in order to make the hydraulic calibration sheath (20), rings are first made from a plane sheet of metal by cutting and welding, the rings are assembled together by welding so as to define a sheath whose shape corresponds to that of the chamber to be made, and a laser is used to cut the sheath to form the microperforations (21) with varying local perforation densities.

16. Method according to claim 14 or claim 15, characterized in that the outer sealing envelope (40) is made by cutting shapes out from a plane metal sheet so as to form rings which are assembled by welding to the spacers and partitions secured to the hydraulic calibration sheath (20), the outer sealing envelope (40) being welded blind onto the spacers (31, 32) and the partitions (50).

17. Method according to claim 14, characterized in that the hydraulic calibration sheath (20) and the outer sealing envelope (40) are made by superplastic deformation or by hydroforming, to take up the shape of two half-shells that are made separately and subsequently welded together.

18. Method according to any one of claims 14 to 17, characterized in that the porous wall (10) is made by the powder metallurgy technique using as an outer matrix the hydraulic calibration sheath (20) which is secured to the outer sealing envelope (40) by the spacers (31, 32) and partitions (50), and by using as the inner matrix, a two-part mandrel (101, 102), and in that the molding volume in which the porous wall (10) is to be formed is filled with a granular mixture constituted by spherical micro-beads (11) of metallic material accompanied by grains of brazing material of an interstitial size, and in that the assembly is then heated so as to cause the brazing material to melt and to form bridges (12) between the micro-beads (11).

19. Method of manufacturing an enclosure according to any one of claims 1 to 5, characterized in that it consists in first making the porous wall (10), then applying the hydraulic calibration sheath (20) on the outside face of the porous wall (10) by hot resilient deformation, adding spacers (30) and optionally partition (50) on the outside of the hydraulic calibration sheath (20), and placing on the outside the outer sealing envelope (40) and fixing it to the spacers (30).

20. Method of manufacturing an enclosure according to any one of claims 1 to 5, characterized in that the porous wall (10) is made first, then the hydraulic calibration sheath (20) is made by sticking flexible elements having microperforations onto the outside face of the porous wall (10), spacers (30) are placed and optionally partitions (50) on the outside of the hydraulic calibration sheath (20) by inserting said spacers and partitions through the sheath into the porous wall, then the outer sealing envelope (40) is placed on the outside of and is fixed to the spacers (30).
